# EUROPEAN PATENT SPECIFICATION

(11) **EP 2 268 071 B1**
(45) Date of publication and mention of the grant of the patent: **18.09.2013**
(21) Application number: 10165950.6
(22) Date of filing: 15.06.2010
(51) Int. Cl.: H04W 12/08, H04L 29/06

(54) **System and method for secured communications by embedded platforms**
System und Verfahren für sichere Kommunikationen durch eingebettete Plattformen
Système et procédé pour sécuriser les communications par des plateformes intégrées

(30) Priority: 23.06.2009 US 219492 P
(43) Date of publication of application: 29.12.2010
(73) Proprietor: Uniloc USA, Inc., Plano TX 75024 (US)
(72) Inventor: Etchegoyen, Craig Stephen, Irvine, CA 92612 (US)
(74) Representative: Casbon, Paul Richard

(56) References cited:
- US-A1- 2003 033 541
- US-A1- 2009 150 674

## Description

This application claims priority to U.S. Provisional Application 61/219,492, which was filed June 23, 2009, and which is fully incorporated herein by reference.

### BACKGROUND OF THE INVENTION

### Field of the Invention

The present invention is directed toward systems for secured communications over a network, and related methods.

### Description of the Related Art

With homeland-security alert levels fluctuating and malicious hackers developing new attacks daily, controlling access to data assets is one of the biggest challenges for critical infrastructure. Both private enterprise and the United States government have recognized the absolute importance of our critical infrastructure, noting that the consequences of a breach could be disastrous, going far beyond the results of the malicious misuse of data.

Cyber-attacks on critical infrastructures, such as banking and finance, chemical, agricultural and food, communications, dams, energy, emergency services, water, transportation systems, nuclear facilities, etc., could lead to catastrophic consequences. Since the majority of these infrastructures use computers and networks linked for strategic business purposes, they are not easily segmented or separated for protection purposes.

Further, with the use of Ethernet and Internet as common platforms of choice in many new infrastructures, there is an increased possibility for security breaches into such infrastructures. Accordingly, current and future infrastructures may be vulnerable to attack or abuse from unauthorized intruders, e.g., "hackers" or insiders operating outside their authority, gaining access to the system using stolen or "cracked" security information. An example of widely utilized control system is a Supervisory Control And Data Acquisition (SCADA) system, which is a computer system for monitoring and controlling a network. For example, attacks to a traffic control systems may endanger public safety, erode public confidence in the traffic control and enforcement systems, and reduce municipal revenues.

Accordingly, it would be desirable to provide a cost-effective system and method for improving the security of a communication network, such as, for example, database servers, application servers, control systems, power supply systems, and other devices supporting an IP or web based user interface or the like. Further, it would be desirable to provide a technique for controlling access to the network by utilizing embedded platforms.

US2009/0150674 discloses the device identity generated by utilizing: machine model, machine or hard drive serial number, machine ROM version, machine bus speed, machine ROM release date, machine ROM size, machine service tag; physical parameters as unique manufacturer characteristics, carbon and silicone degradation and small device failures.

### SUMMARY OF THE INVENTION

The present invention is defined by the subject matter of the independent claims.

In accordance with other aspects of the embodiments described herein, there is provided a method that involves generating a device identifier based at least in part on machine parameters associated with the one or more of the following: machine model, processor model, processor details, processor speed, memory model, memory total, network model of an Ethernet interface, network MAC address of the Ethernet interface, BlackBox Model, BlackBox Serial, OS install date, nonce value, and nonce time of day.

In related aspects, the public network may comprise a wireless communication network. The wireless communication network may implement at least one of CDMA and GSM standards. In the alternative, or in addition, the wireless communication network may implement at least one of 802.11a, 802.11b, 802.11g, 802.11n, and 802.11p (Dedicated Short Range Communications) standards.

It is noted that one or more of the techniques and methodologies described herein may be performed by embedded applications, platforms, or systems. For example, the techniques implemented by static network devices/nodes described herein may alternatively, or additionally, be performed by applications or components that are embedded in a traffic controller, traffic signal, surveillance cameras, sensors, and/or detectors that are at or near a given traffic intersection, etc. Similarly, the techniques implemented by the mobile network device/nodes described herein may alternatively, or additionally, be performed by applications or components that are embedded in vehicles or portable devices that may be carried by vehicle occupants, such as, for example, mobile phones, digital watches, personal or digital assistants (PDAs), etc. It is further noted that the methods described herein may be performed by a general-purpose computer system and/or an embedded application or component of a special-purpose system

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 provides a block diagram of certain components of an exemplary system for secured communication with a control center.

FIG. 2 illustrates components of an exemplary device identifier.

FIG. 3 illustrates an exemplary embodiment of a network for secure communication between field security devices and an authentication server.

FIG. 4 illustrates exemplary embedded computing components with which software components can be executed to perform the secured communication method according to one or more embodiments of the present invention.

FIG. 5 illustrates additional exemplary embedded computing components with which software components can be executed to perform the secured communication method according to one or more embodiments of the present invention.

### DETAILED DESCRIPTION

As mentioned, it would be desirable to have a cost-effective system and method for improving the security of a communication network, such as, for example, database servers, application servers, control systems, power supply systems, and other devices supporting an Internet Protocol (IP) or web based user interface or the like. Further, it would be desirable to provide a technique for controlling access at the outer boundary of the network rather than at the inner core of the network.

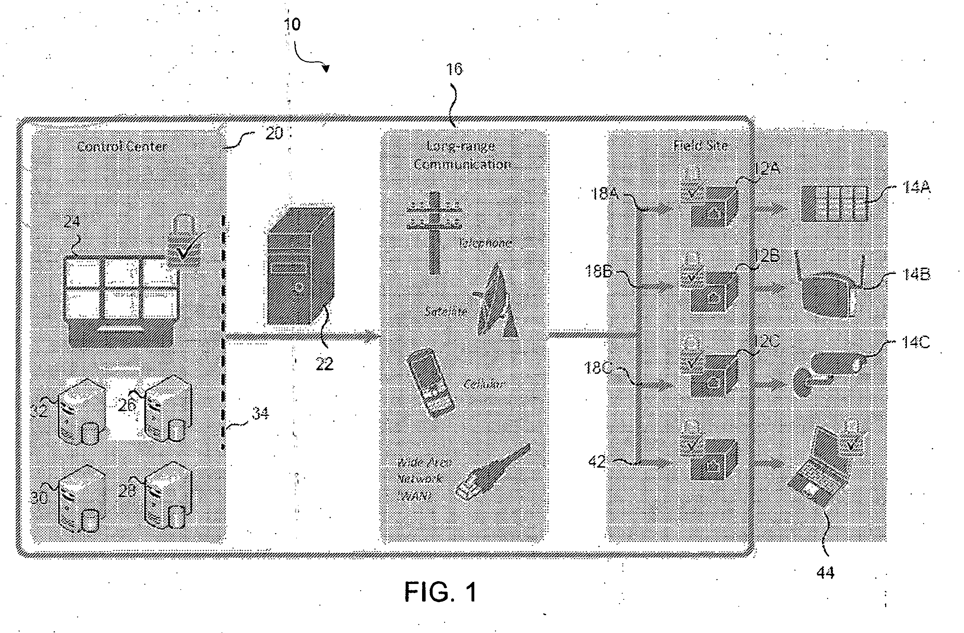

With reference FIG. 1, there is provided an embodiment of a system 10 for securing communication with a control center 20. Control center may be a secured server or a network of computers, which may be located behind a firewall. System 100 includes field security devices/apparatus or extended trust devices 12A, 12B, and 12C and remote clients (e.g., remote clients 14A, 14B, 14C). It will be understood that the system 10 may comprise any number of extended trust devices and remote clients. Remote clients may be control systems (e.g., traffic, water, electricity control systems), surveillance systems, other computer networks, etc.

In the illustrated embodiment, field security devices/apparatuses 12A, 12B, and 12C are operatively coupled to remote clients 14A, 14B, and 14C, respectively. Each field security device 12 may function as a security appliance that creates a secure, virtual-network layer connection between a given remote client 14 (coupled to the given field security device 12) and the control center 20. As will be explained in further detail below, the field security devices 12A, 12B, 12C and authentication server 22 at the control center 20 utilize device recognition technology to establish secure private networks 18A, 18B, and 18C between the control center 20 and the field security devices 12A, 12B, and 12C, respectively.

Each secure private network (SPN) 18 may tunnel across one or more segments of a public network 16. Public network 16 may comprise one or more public portions of the Internet (e.g., 802.3, DSL, cable, Ethernet, etc.). Public networks 16 and 16 may comprise a wireless communication network, such as, for example, CDMA, GSM, etc. Public networks 16 and 16 may comprise a wireless local area network (WLAN), such as, for example, 802.11a, 802.11b, 802.11g, 802.11n, 802.11p, etc. It is noted that public networks 16 and 16 may comprise any communication network, wired or wireless, utilizing any known standards, such as, for example, wide area networks (WANs), campus area networks (CANs), metropolitan area networks (MANs), wireless application protocol (WAP), etc. In the alternative, or in addition, SPN 18 may tunnel across a traffic control network, a portion of which is public.

Located between control center 20 and network 16 is an authentication server 22 that is in operative communication with one or more workstations 26, 28, such as, for example, via a node/switch in between authentication server 22 and a general server 24 (i.e., not an authentication server). Control center 20 may include a firewall 34 between general server 24 and public network 16, and thereby add another layer of protection for communications to and from control center 20. In the alternative, or in addition, control center 20 may comprise a firewall (not shown) between authentication server 22 and public network 16. In the alternative, or in addition, one or more authentication servers and/or workstations operatively coupled to the authentication servers may be located outside of control center 20, such as, for example, at a remote site.

System 10 may include a network device 44, such as, for example, laptop computer, tablet computer, PDA, mobile phone or device, etc. Network device 44 may comprise, for example, a field technician's laptop for troubleshooting remote clients 14A, 14B, and 14C. Device 44 needs to connect to authentication server 22 in order to establish a SPN 42 between a user of network device 44 (e.g., a field engineer) and control center 20. In one embodiment, device 44 bypasses firewall 34 via a VPN soft-server on server 24. Once authentication server 22 authorizes device 44, SPN 42 is established. SPN 42 may essentially function as a tunnel within the VPN soft-server, and therefore may be analogous to a tunnel within a tunnel. In another embodiment (not shown), field security device 12 may act as a proxy for a network device 44 whose user wishes to access the network, when network device 44 is connected behind field security device 12.

It is noted that SPN 18 has the ability to provide a star topology whereby field security devices 12A, 12B, 12C may communicate with each other, through server 22, thereby providing a way for remote clients 14A, 14B, and 14C to communicate with each other as well. For example, in one embodiment, SPN 18 may be configured so that field security devices 12A, 12B, 12C can only communicate with server 22 (and workstations 26, 28). Such an embodiment would normally be applicable to an Enterprise Server deployment, thereby preventing a control center 20 for one city from affecting critical assets of a control center 20 of another city.

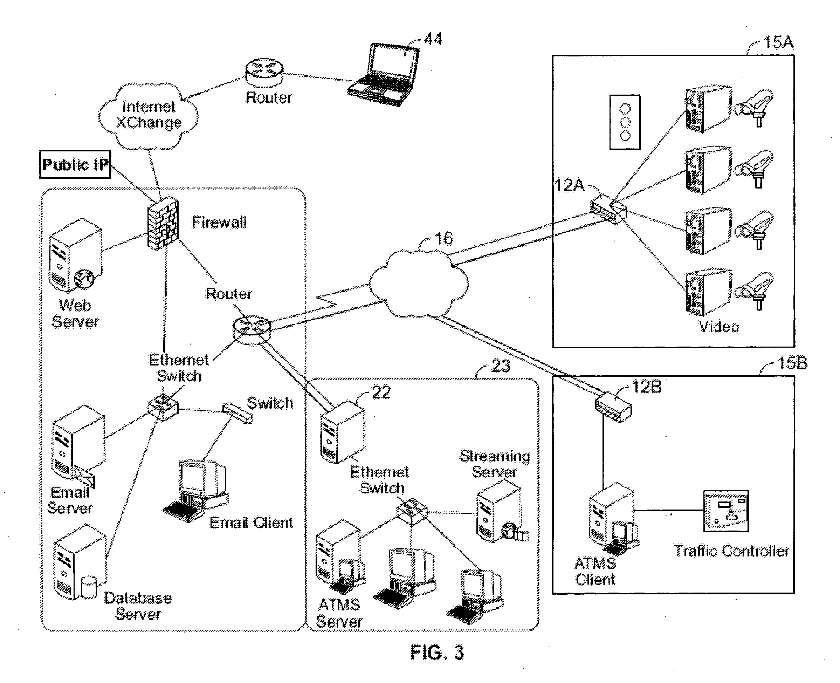

FIG. 3 illustrates an exemplary embodiment of a network for securing communication between field security devices 12A, 12B and authentication server 22. Portions 15A, 15B, and 23 of the shown network represent the secured portions of the network. Portion 15A may include a field security device 12A in operative communication with a traffic signal/light and/or surveillance/video camera(s). Portion 15B may include a field security device 12B in operative communication with an Advanced Traffic Management Systems (ATMS) client, which is in operative communication with a traffic controller. Portion 23 may include an authentication server 22 in operative communications with other servers, such as, for example, an ATMS server or a streaming server, via an Ethernet switch or the like. Network device 44 (e.g., laptop computer) may also be authenticated via server 22 for access to field security devices 12A, 12B.

Device Identifiers:

As noted above, field security devices 12A, 12B, 12C and authentication servers 22, 24, as well as network device 44, may utilize device recognition technology to establish SPNs 18A, 18B, and 18C. For example, each field security device 12 may be adapted to transmit self-identification information to authentication server 22 upon being powered up in the field. The self identification information or device identifier generally comprises information that is expected to be unique for field security device 12. For example, the device identifier for a given field security device 12 may comprise a serial number and/or location information (e.g., an IP address, geo-location code, etc.).

The device identifier is preferably generated from machine parameters resident on field security device 12, such as, for example, hard disk volume name, user name, device name, user password, hard disk initialization date, etc. The machine parameters may relate to the platform on which the web browser runs, such as, for example, CPU number, or unique parameters associated with the firmware in use. The machine parameters may also include system configuration information, such as amount of memory, type of processor, software or operating system serial number, etc. The device identifier generated from the machine parameters may include the field security device's IP address and/or other geo-location code to add another layer of specificity to field security device's unique identifier. In the alternative, or in addition, the device identifier may comprise a randomly generated and assigned number that is unique for the field security device 12.

In one embodiment, the device identifier for field security device 12 is generated and stored in the field security device's memory before field security device 12 is deployed into the field. In another embodiment, the device identifier, or a portion thereof, is generated after field security device 12 is deployed and/or powered on in the field.

It is noted that an application running on field security device 12 or otherwise having access to the field security device's hardware and file system may generate a unique device identifier using a process that operates on data indicative of the field security device's configuration and hardware. The device identifier may be generated using a combination of user-configurable and non-user-configurable machine parameters as input to a process that results in the device identifier, which may be expressed in digital data as a binary number. Each machine parameter may include data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier that has a very high probability of remaining unchanged during normal operation of the target device. Thus, the resulting device identifier should be highly specific, unique, reproducible and stable as a result of properly selecting the machine parameters.

The application for generating the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured application operating or otherwise having had access to the same field security device for which the device identifier was first generated. Conversely, each identifier, again to a very high degree of certainty, can be successfully reproduced by the suitably configured application operating or otherwise having access to the same field security device on which the identifier was first generated.

The application may operate by performing a system scan to determine a present configuration of the field security device. The application may then select the machine parameters to be used as input for generating the unique device identifier. Selection of parameters may vary depending on the system configuration. Once the parameters are selected, the application may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; BlackBox model; BlackBox serial; BlackBox details; BlackBox damage map; BlackBox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

In one example, the device identifier may also be generated by utilizing machine parameters associated with one or more of the following: machine model, processor model, processor details, processor speed, memory model, memory total, network model of each Ethernet interface, network MAC address of each Ethernet interface, BlackBox Model, BlackBox Serial (e.g., using Dallas Silicone Serial DS-2401 chipset or the like), OS install date, nonce value, and nonce time of day.

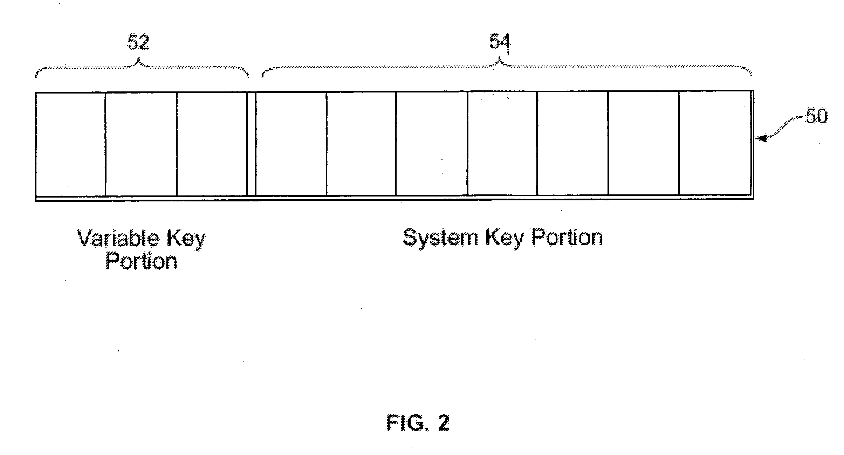

With reference to FIG. 2, in one exemplary embodiment, a device identifier 50 may include two components - namely, a variable key portion 52 and a system key portion 54. The variable key portion 52 may be generated by reference to a variable platform parameter, such as via reference to system time information, although other parameters which are variable may be utilized in other embodiments. The system key portion 54 may include the above described parameters expected to be unique to the field security device 12, such as, for example, hard disk volume name, user name, computer name, user password, hard disk initialization date, or combinations thereof. Portions 52 and/or 54 may be combined with the IP address and/or other platform parameters of the field security device 12. It is noted that device identifiers, or portions thereof, may be encrypted to add an additional layer of specificity and security.

It is noted that device identifiers may be generated for network device 44, authentication server 22, and workstations 26, 28 in the same manner as described above for the field security devices 12. With reference to the exemplary embodiment of FIG. 1, only server 22, workstations 26 and 28, and laptop 44 have been authenticated.

Secure Private Networks (SPNs):

With continued reference to the exemplary embodiment of FIG. 1, it is noted that each field security device 12 is generally adapted to transmit its device identifier back to the control center 20. Upon being powered on and/or connected to remote client 14, field security device 12 preferably accesses an available public network 16, locates or identifies an authentication server 22 at the control center 20, and then establishes a connection with authentication server 22. Upon establishing a connection with authentication server 22, field security device 12 may transmit its device identifier to authentication server 22. The device identifier is preferably encrypted prior to being transmitted by field security device 12 over to public network 16, and then decrypted when received by authentication server 22.

In response to receiving the device identifier from a given field security device 12, authentication server 22 may access a database of authorized device identifiers corresponding to known devices that are authorized to establish a SPN 18 with control center 20. The database may be located at control center 20, such as, for example, on one of servers 22, 24 and/or workstations 26, 28, 30, 32. The database is preferably located on server 22 and/or workstations 26, 28. In the alternative, or in addition, the database may be located on a server or machine that is not located at the control center 20, yet is accessible by server 22.

When the device identifier from field security device 12 matches one of the authorized device identifiers in the database, authentication server 22 and field security device establish a SPN with each other, and thereby create a SPN 18 between control center 20 and the remote client controller 14. In this way, the field security device acts as an extended trust device; extending the secured communication link to any remote client connected to it. SPN 18 generally tunnels across one or more segments of public network 16 to provide a secure channel of communication between the control center 20 and remote client 14.

SPN 18 may be established according to any known technique, such as, for example, via the creation of virtual private networks (VPNs), in which some of the links between nodes are carried by open connections or virtual circuits in a larger network, such as, for example, public portions of the Internet. Link-layer protocols of the virtual network may be tunneled through the larger network.

Field security devices/extended trust devices 12A-C may get serialized labeling at the manufacturing facility, similar to copies of software for authenticity and tracking/history. For plug-and-play in the field, the appliances may first be connected directly to the authentication server, which may be done at a field tech's offices before initial server deployment, and the IP address of the server may be stored. The device fingerprint may also be taken at this time. The deployment address for each appliance may be entered into the server, such as for use in automated geographic mapping of appliance locations. In the alternative, appliances 12 may be configured from the field using an authenticated PC connected to the appliance.

It is noted that one or more SPNs 42 may be established between authentication server 22 and any network devices 44 in the same manner as described above for the field security devices 12. SPN 42 may tunnel across one or more segments of public network 42 to provide a secure channel of communication between control center 20.

In one embodiment, field security device 12 sends its device identifier or machine fingerprint to authentication server 22. When server 22 verifies that the device identifier corresponds to a known or authorized device, the server sends an authentication/verification signal to device 12. Field security device 12 then sends a certificate or public key to server 22 to establish SPN 18. Server 22 may use a private key to check the certificate. Server 22 may then send a server certificate or public key back to security device 12 to establish SPN 18.

In one embodiment, prior to authenticating server 22 establishing SPN 18 with remote device 14, field security device 12 may be required send to the authentication server a client identifier comprising one or more of an IP address of remote client 14, a serial number of client 14, a predetermined identification number of client 14, a user name, a client name, and a user password. In one embodiment, a device identifier generator software (not shown) may be installed onto remote client 14. The identifier software generator may generate a device identifier for client 14 for use as the client identifier. The identifier software generator may be configured to generate a unique device ID in similar ways as described below with respect to field security device 12.

Authentication server 20 may further use the client identifier to determine access privilege of the client to the control center. In one embodiment, at the time when field security device 12 is being registered with authentication server 22, field device 12 may request remote client 14 to send to field device 12 one or more of the client identifier described above. The client identifier is then sent to authentication server 22 for use to register remote client 14 at the same time or immediate after the registration of field security device 12. In this way, if security field device 12 is stolen, authentication server 22 will not grant a new client access to control center 20 if the client identifier does not match with the client identifier that was previous registered with the system.

Field Security Device:

Field security device 12, which may also be referred to as a field appliance or extended trust device, creates a secure, virtual-network layer connection between control center 20 over otherwise public communication networks, including or utilizing the Internet, Ethernet, and wireless networks. Field security device 12 may be operatively coupled to controllers, sensors, detectors, surveillance cameras, uninterruptible power supply (UPS) systems, or other devices supporting an IP or web based user interface.

In accordance with one aspect of the embodiments described herein, there is provided field security device 12 for providing SPN 18 between a field remote client 14 and a control center 20, comprising: a first connector for interfacing with the remote client 14; a communication module; a processor module operatively coupled to the first connector and the communication module; and a memory module operatively coupled to the processor module. In one embodiment, the memory module comprises executable code for the processor module to: (a) access public network 16 or traffic control network via the communication module; (b) locate and/or connect with authentication server 22 of control center 20 via public network 16; and (c) send a device identifier to authentication server 22 via the communication module, the device identifier being based on a combination of both user-configurable and non-user-configurable parameters of the field security device 12; and (d) in response to authentication server 22 authenticating the device identifier from field security device 12, establish SPN 18 between field security device 12 and control center 20, wherein established SPN 18 tunnels across at least one segment of public network 16.

The processor module of field security device 12 may comprise one or more processors, such as, for example, a Motorola MPC8321EEC Microprocessor (333 MHz core processor speed, 32MB flash memory, 64MB DDR2 memory, 32 Mbs VPN throughput) or the like. The first connector of the field security device 12 may comprise a receiving port or the like (e.g., 1WAN, 4WAN, RJ45, 10/100 Mbit/s Ethernet, etc.).

The field security device 12 is preferably adapted for easy plug-and-play field installation, with no field PC required, no device configuration required in the field, and no passwords or keys required to manage. In essence, when field security device 12 is connected or powered up, it preferably "phones home" to an authentication server and establishes its own device-locked point-to-point SPN 18.

The memory module of field security device 12 may further comprise executable code for the processor module to detect network intrusions, determine locations of the intrusions, and notify the control center 20. Field security device 12 may be adapted to continuously or periodically verify its operational status via one or more authentication servers at the control center 20. Field security device 12 is preferably cross-platform compatible with any operating system and field control hardware. Field security device 12 is preferably adapted to be NEMA TS2 compliant.

Field security device 12 may be adapted to connect to any known network routers, switches, and/or firewall security devices. The field security device 12 may be adapted to perform a self-test at startup. Field security device 12 may comprise one or more LED indicators to power and communications link status, or activities status.

Field security device 12 may be field hardened for use inside or outside of the field traffic cabinet. Field security device 12 may be shelf mountable for easy in-cabinet placement with optional DIN rail or sidewall mounting. Field security device 12 may be adapted to defined environmental conditions, such as, for example, -29°F to +165°F (-34°C to +74°C), 0 to 95% relative humidity.

It is noted that security device/appliance 12 may be adapted to access, learn, or otherwise determine the MAC IDs of remote clients 14 or other devices operatively coupled with (e.g., plugged into) device 12. Further, field security device 12 may utilize the learned MAC IDs to establish bi-directional security with such remote clients 14, thereby prohibiting unknown/unauthorized network devices from connecting to the secured network via the device 12. For example, field security device 12 may comprise a memory module storing executable code for a processor module to access and store into the memory module MAC IDs of those remote clients 14 connected to field security device 12. The executable code may further comprise instructions for the processor module to relay the MAC ID or derivations thereof to control center 20 to verify whether the MAC ID or derivation thereof corresponds to a known or authorized device. In response to authentication server 22 of the control center 20 authenticating the MAC ID or derivation thereof, security device 12 may allow the remote client 14 to communicate via a SPN 18 between the control center 20 and the device 12. Otherwise, remote client 14 is blocked or prohibited from communicating with the control center 20 via SPN 18.

Authentication Server:

In accordance with another aspect of the embodiments described herein, there is provided authentication server 22 for providing a SPN 18 between a control center 20 and a field security device 12, field security device 12 being in operative communication with a remote client 14. The authentication server 22 may include a communication module adapted to receive a device identifier over a public network 16 from field security device 12, the device identifier being based on, or derived from, a combination (or plurality) of machine parameters resident on field security device 12. The machine parameters may be user-configurable or non-user-configurable parameters. In one embodiment, the combination of machine parameters includes at least one user-configurable parameter and at least one non-user-configurable machine parameter. The authentication server 22 may further include a processor module operatively coupled to the communication module and a memory module operatively coupled to the processor module. In one embodiment, the memory module may store executable code, which, when executed by the processor module, enables the processor module to (a) access, in response to the communication module receiving the device identifier from field security device 12, a database of authorized device identifiers corresponding to known field security devices, and (b) establish, in response to the received device identifier matching one of the authorized device identifiers, the SPN 18 between the field security device 12 and the control center 20, wherein the established SPN 18 tunnels across at least one segment of the public network 16.

When multiple field security devices 12A, 12B, 12C establish SPNs 18A, 18B, 18C with a given authentication server 22, a point-to-multipoint SPN may be established between control center 20 with each field security devices 12A, 12B, 12C may be located.

Authentication server 22 alone or in conjunction with workstations 26, 28 and/or other components of control center 20, may allocate, manage, and control field security devices 12 and/or PC clients from a single location, such as, for example, control center 20. Control center 20 and components thereof make it possible to gain real-time insight into the status of field security devices 12 and network devices 44 (e.g., a PC client or the like) participating in secured network or system 10.

Further, components of the system 10 described herein make it possible to define and receive instant status reports and updates regarding any changes to the secured network, and to receive alerts regarding any unauthorized access attempts by unauthorized devices. The notifications or alerts at server 22 regarding such unauthorized connection attempts may include information regarding the unauthorized device, the time of the attempted access, the geo-location of the unauthorized device or point of attempted access, etc.

In accordance with another aspect of the embodiments described herein, there is provided an enterprise server that may connect or be in operative communication with a plurality of "child" authentication servers. The child authentication servers may be located at multiple control center 20s. The master or enterprise server may be adapted to allow authorized field technicians to have access to the multiple control center 20s via one enterprise server or service provider. Such technicians may have simultaneous access to the control center 20s via the enterprise server. In the alternative, or in addition, each of the authorized technicians may have the ability to simultaneously access one or more of the field security devices that are in operative communicative communication with the control center 20s via the enterprise server.

In accordance with yet another aspect of the embodiments described herein, there is provided a system wherein authentication server 22 sends its own device identifier or machine fingerprint to field security device 12 for mutual or two-way authentication. In addition to having server 22 verify and authenticate the device 12's identifier, device 12 also verifies and authenticates server 22's identifier, before a SPN 18 is established between device 12 and server 22. Such a system would provide a more robust scheme for securing communication with control center 20. In the alternative, or in addition, authentication server 22 may be adapted to sends its device identifier to a network device 44 (explained in further detail below) for mutual authentication between server 22 and device 44, without which SPN 42 may not be established.

Network Device:

In accordance with another aspect of the embodiments described herein, there is provided a network device 44 (e.g., a laptop computer or PDA) for securely communicating with a control center 20, comprising: a communication module adapted to access a public network; a processor module operatively coupled to the communication module; and a memory module operatively coupled to the processor module. In one embodiment, the memory module comprises executable code for the processor module to: (a) access public network 16 via the communication module; (b) locate and/or connect with an authentication server 22 of the control center 20 via the public network 16; (c) send a device identifier to authentication server 22 via the communication module, device identifier being based on a combination of both user-configurable and non-user-configurable parameters of the network device 44; and (d) in response to authentication server 22 authenticating device identifier from network device 44, establish a SPN 42 between network device 44 and the control center 20, wherein established SPN 42 tunnels across at least one segment of public network 16.

Network device 44, as well as the workstations 26, 28, may comprise client software for device fingerprinting and registration on SPNs or the like. It is noted that network device 44 may comprise a client software that designates network device 44 as a field technician device, as opposed to control center 20 workstation devices 26 and 28, which may have licensing provisions that are different from other network devices. The client software on device 44 may comprise instructions for its host network device to: access a public network; locate an authentication server 22 of control center 20 via public network 16; derive a device identifier from a combination of or from a plurality of machine parameters, which parameters may include at least one user-configurable parameter and at least one non-user-configurable parameter of the device 44; and send the device identifier to authentication server 22. The client software may further comprise instructions for its host network device to: in response to authentication server 22 authenticating the device identifier, establish a SPN 42 with the control center 20, wherein established SPN 42 tunnels across at least one segment of the public network 16.

Method for Providing a SPN:

In accordance with another aspect of the embodiments described herein, there is provided a method for providing a SPN between a device (e.g., field security device 12 or network device 44) and a control center 20, comprising: accessing a public network (e.g., networks 16 or 16); and locating and/or connecting with an authentication server (e.g., server 22) of control center 20 via the public network. The method may further comprise sending a device identifier for the device to the authentication server via the communication module, the device identifier being based on a combination of both user-configurable and non-user-configurable parameters of the network appliance. The method may further comprise, in response to authentication server authenticating the device identifier, establishing the SPN between control center 20 and the device. The established SPN preferably tunnels across at least one segment of the public network.

Embedded Systems and Applications:

As noted above, one or more of the techniques and methodologies described herein may be performed by embedded applications, platforms, or systems. The methods described herein may be performed by a general-purpose computer system and/or an embedded application or component of a special-purpose apparatus (e.g., traffic controller, traffic signal, surveillance cameras, sensors, detectors, vehicles, vehicle navigation systems, mobile phones, PDAs, etc.).

For example, in one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; and any other predefined hardware information stored (optionally encrypted) in EEPROM or the like; any variations/combinations thereof.

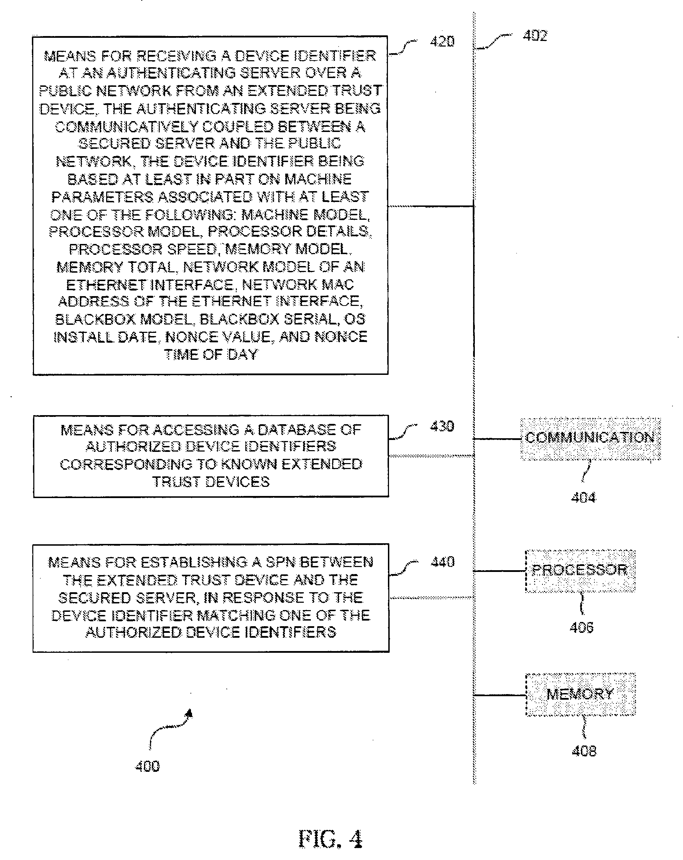

In accordance with one or more aspects of the embodiments described herein, there are provided devices and components (e.g., mobile or static network devices) for secured communications. With reference to FIG. 4, there is provided an exemplary apparatus 400 that may be configured as either a computing device, or as an embedded component or processor or similar device for use within a computing device. As illustrated, apparatus 400 may comprise a means 420 for receiving a device identifier at an authenticating server over a public network from an extended trust device, the authenticating server being communicatively coupled between a secured server and the public network, the device identifier being based at least in part on machine parameters associated with at least one of the following: machine model, processor model, processor details, processor speed, memory model, memory total, network model of an Ethernet interface, network MAC address of the Ethernet interface, BlackBox Model, BlackBox Serial, OS install date, nonce value, and nonce time of day. Apparatus 400 may comprise a means 430 for accessing a database of authorized device identifiers corresponding to known extended trust devices. Apparatus 400 may further comprise a means 440 for establishing a SPN between the extended trust device and the secured server, in response to the device identifier matching one of the authorized device identifiers.

In related aspects, apparatus 400 may further comprise a means for receiving a client identifier from the extended trust device, wherein a client is directly coupled to the extended trust device, and wherein the client identifier comprises at least one item selected from the list consisting of a MAC address of the client, an Internet Protocol address of the client, a serial number of the client, a predetermined identification number of the client, a user name, a client name, and a user password. Apparatus 400 may further comprise a means for determining access privilege of the client to the secured server by authenticating the client identifier.

In further related aspects, the public network may comprise a wireless communication network. The wireless communication network may implement at least one of CDMA and GSM standards. In the alternative, or in addition, the wireless communication network may implement at least one of 802.11a, 802.11b, 802.11g, 802.11n, and 802.11p standards.

Apparatus 400 may optionally include a processor component 406 having at least one processor, in the case of apparatus 400 configured as computing device, rather than as a processor. Processor 406, in such case, may be in operative communication with means 420-440, and components thereof, via a bus 402 or similar communication coupling. Processor 406 may effect initiation and scheduling of the processes or functions performed by means 420-440, and components thereof.

Apparatus 400 may optionally include a transceiver/communication component 404 for communicating with mobile nodes and/or other static nodes. A stand alone receiver and/or stand alone transmitter may be used in lieu of or in conjunction with communication component 404.

Apparatus 400 may optionally include a means for storing information, such as, for example, a memory device or component 408. Computer readable medium or memory component 408 may be operatively coupled to the other components of apparatus 400 via bus 402 or the like. The computer readable medium or memory device 408 may be adapted to store computer readable instructions and data for effecting the processes and behavior of means 420-440, and components thereof, or processor 406 (e.g., in the case of apparatus 400 configured as a computing device) or the methods disclosed herein.

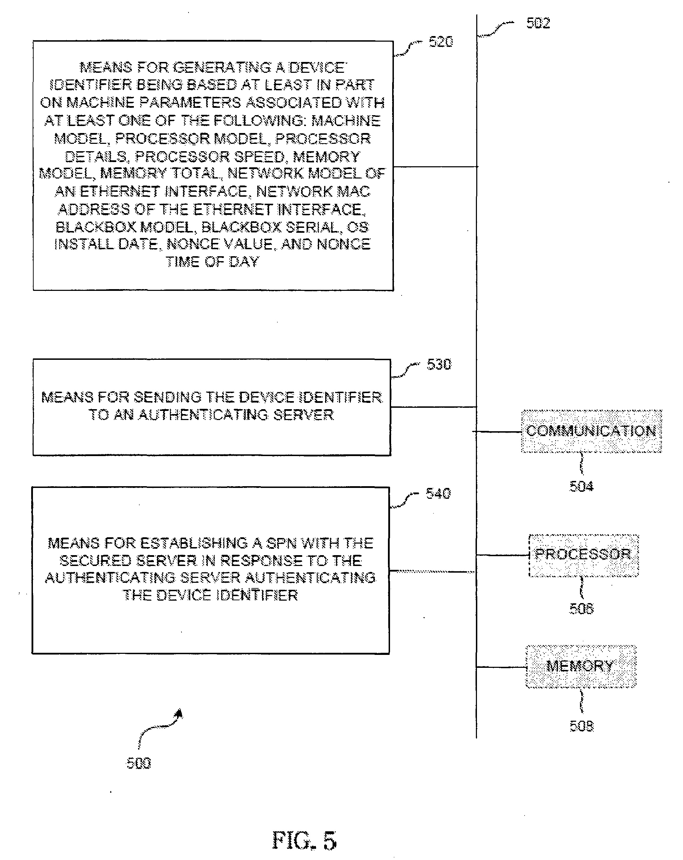

With reference to FIG. 5, there is provided an exemplary apparatus 500 (e.g., a client device) that may be configured as either a computing device, or as an embedded component or processor or similar device for use within a computing device. As illustrated, apparatus 500 may comprise a means 520 for generating a device identifier being based at least in part on machine parameters associated with at least one of the following: machine model, processor model, processor details, processor speed, memory model, memory total, network model of an Ethernet interface, network MAC address of the Ethernet interface, BlackBox Model, BlackBox Serial, OS install date, nonce value, and nonce time of day. Apparatus 500 may comprise a means 530 for sending the device identifier to an authenticating server coupled between a secured server and apparatus 500, wherein the secured server may be located behind a firewall. Apparatus 500 may further comprise a means 540 for establishing a SPN with the secured server in response to the authenticating server authenticating the device identifier.

In related aspects, the device identifier may be based at least in part on a carbon degradation characteristic of a computer chip of the device. The device identifier may be based at least in part on a silicone degradation characteristic of a computer chip of the device. The device identifier may be generated by utilizing at least one irreversible transformation of the machine parameters.

Apparatus 500 may optionally include a processor component 506 having at least one processor, in the case of apparatus 500 configured as computing device, rather than as a processor. Processor 506, in such case, may be in operative communication with means 520-540, and components thereof, via a bus 502 or similar communication coupling. Processor 506 may effect initiation and scheduling of the processes or functions performed by means 520-540, and components thereof.

Apparatus 500 may optionally include a transceiver/communication component 504 for communicating with mobile nodes and/or other static nodes. A stand alone receiver and/or stand alone transmitter may be used in lieu of or in conjunction with communication component 504.

Apparatus 500 may optionally include a means for storing information, such as, for example, a memory device or component 508. Computer readable medium or memory component 508 may be operatively coupled to the other components of apparatus 500 via bus 502 or the like. The computer readable medium or memory device 508 may be adapted to store computer readable instructions and data for effecting the processes and behavior of means 520-540, and components thereof, or processor 506 (e.g., in the case of apparatus 500 configured as a computing device) or the methods disclosed herein.

While the present invention has been illustrated and described with particularity in terms of preferred embodiments, it should be understood that no limitation of the scope of the invention is intended thereby.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method of preventing cyber-attacks on critical infrastructures, which critical infrastructures comprise remote devices (14), such as controllers, sensors, detectors, surveillance cameras and uninterruptible power supply systems, remote from a control center (20), which method comprises the steps of:
operatively coupling an extended trust device (12A, 12B, 12C) to a remote device (14);
receiving a device identifier at an authenticating server (22) over a public network (16) from said extended trust device (12A, 12B, 12C), the authenticating server (22) being communicatively coupled between a secured server (24) in said control center (20) and the public network (16), the device identifier derived from a plurality of machine parameters of the extended trust device (12A, 12B, 12C);
accessing a database of authorized device identifiers corresponding to known extended trust devices; and
establishing, in response to the device identifier matching one of the authorized device identifiers, a secure private network , SPN, (18) between the extended trust device (12A, 12B, 12C) and the control center (20) so that said secure private network (18) tunnels across at least one segment of said public network (16) to provide a secure channel of communication between said control center (20) and said remote device (14).

2. The method of claim 1, further comprising receiving a client identifier from the extended trust device, wherein the client identifier is associated with said remote device (14) operatively coupled to the extended trust device.

3. The method of claim 2 wherein the client identifier is selected from the group consisting of a MAC address of the remote device (14), an Internet Protocol address of the remote device, a serial number of the remote device, a predetermined identification number of the remote device, a user name, a remote device name, and a user password.

4. The method of claim 2, further comprising authenticating the client identifier.

5. The method of claim 4 wherein the authenticating step further comprises determining an access privilege of the remote device to the secured server.

6. The method of claim 1 wherein the machine parameters are selected from the group consisting of machine model, processor model, processor details, processor speed, memory model, memory total, network model of an Ethernet interface, network MAC address of the Ethernet interface, BlackBox Model, BlackBox Serial, OS install date, nonce value, and nonce time of day.

7. An extended trust device (12A, 128, 12C; 500) for secured communication with at least one static node (22) in a control center (20), comprising:
a connector for interfacing with a remote device (14) such as controllers, sensors, detectors, surveillance cameras and uninterruptible power supply systems;
a transceiver (530) configured to communicate with the at least one static node (22);
a processor (506) operatively coupled to the transceiver (530); and
a memory component (508) operatively coupled to the processor (506) and comprising executable code, which when executed enables the processor to:
locate the at least one static node (22) via a public network (16);
derive a device identifier from a plurality of machine parameters of the extended trust device; (12A, 12B, 12C; 500)
send the device identifier to the at least one static node (22) via the transceiver (530); and
establish a secure private network (SPN) with the control center (20), so that said secure private network (18) tunnels across one or more segment of said public network (16) to provide a secure channel of communication between said control center (20) and said remote device (14).

8. The client device of claim 7, wherein the SPN is established in response to the at least one static node (22) authenticating the device identifier.

9. The extended trust device of claim 7, wherein the device identifier is based at least in part on a carbon degradation characteristic of a computer chip of the extended trust device.

10. The extended trust device of claim 7, wherein the device identifier is based at least in part on a silicone degradation characteristic of a computer chip of the extended trust device.

11. The extended trust device of claim 7, wherein the device identifier is generated by utilizing at least one irreversible transformation of the machine parameters.

12. The extended trust device of claim 7, wherein the machine parameters are selected from the group consisting of machine model, processor model, processor details, processor speed, memory model, memory total, network model of an Ethernet interface, network MAC address of the Ethernet interface, BlackBox Model, BlackBox Serial, OS install date, nonce value, and nonce time of day.

13. A computer readable medium storing executable instructions that, when executed by a device, cause the device to perform process steps comprising:
operatively coupling to a remote device
deriving a device identifier from a plurality of machine parameters resident on the device;
sending the device identifier to an authenticating server (22) coupled between a secured (24) server in a control center (20) and the device, wherein the secured server (24) is located behind a firewall (34); and
establishing a secure private network (SPN) with the control center (20) said secure private network tunnels across at least one segment of said public network to provide a secure channel of communication between said control center and said remote device.

14. The computer readable medium of claim 13, wherein the device identifier is selected from the group consisting of a MAC address, an Internet Protocol address, a serial number, a predetermined identification number, a user name, a device name, and a user password. 15. 13

15. The computer readable medium of claim 13, further comprising the device performing process steps for:
receiving, after the sending step, an authentication signal for the device identifier from the authenticating server (22); and
establishing a secure private network (SPN) with the secured server (24) in response to receiving the authentication signal.

## Patentansprüche

1. Verfahren zur Verhinderung von Cyberattacken auf kritische Infrastrukturen, wobei die kritischen Infrastrukturen Endgeräte (14), wie Controller, Sensoren, Detektoren, Überwachungskameras, unterbrechungsfreie Stromversorgungssysteme umfassen, die entfernt von einem Kontrollzentrum (20) sind, wobei das Verfahren die Schritte umfasst von:
eine erweiterte Vertrauensvorrichtung (12A, 12B, 12C) in Wirkbeziehung an ein Endgerät (14) koppeln;
empfangen einer Gerätekennung an einem Authentifizierungsserver (22) über ein öffentliches Netzwerk (16) von der erweiterten Vertrauensvorrichtung (12A, 12B, 12C), wobei der Authentifizierungsserver (22) kommunizierend zwischen einen gesicherten Server (24) im Kontrollzentrum (20) und dem öffentliche Netzwerk (16) gekoppelt ist, die Gerätekennung von einer Vielzahl von Maschinenparametern der erweiterten Vertrauensvorrichtung (12A, 12B, 12C) abgeleitet wird;
auf eine Datenbank von autorisierten Gerätekennungen, die mit bekannten erweiterten Vertrauensvorrichtungen korrespondieren, zurückgreifen; und
als Antwort auf die Gerätekennung, die einer der autorisierten Gerätekennungen entspricht, ein sicheres privates Netzwerks, SPN, (18) zwischen der erweiterten Vertrauensvorrichtung (12A, 12B, 12C) und dem Kontrollzentrum (20) etablieren, so dass das sichere private Netzwerk (18) über zumindest ein Segment des öffentlichen Netzwerks (16) tunnelt, um einen sicheren Kommunikationskanal zwischen dem Kontrollzentrum (20) und dem Endgerät (14) bereitzustellen.

2. Das Verfahren nach Anspruch 1, zusätzlich umfassend, Empfangen einer Clientkennung von der erweiterten Vertrauensvorrichtung, wobei die Clientkennung mit dem Endgerät (14) assoziiert ist, welches in Wirkbeziehung an die erweiterte Vertrauensvorrichtung gekoppelt ist.

3. Das Verfahren nach Anspruch 2, wobei die Clientkennung aus der Gruppe, bestehend aus einer MAC-Adresse des Endgeräts (14), einer Internetprotokolladresse des Endgeräts, einer Seriennummer des Endgeräts, einer vorher festgelegten Identifikationsnummer des Endgeräts, eines Benutzernamens, eines Endgerätenamens und eines Benutzerpassworts, ausgewählt wird.

4. Das Verfahren nach Anspruch 2, wobei dieses zusätzlich das Authentifizieren der Clientkennung umfasst.

5. Das Verfahren nach Anspruch 4, wobei der Authentifizierungsschritt zusätzlich das Bestimmen einer Zugriffsberechtigung des Endgeräts auf den gesicherten Server umfasst.

6. Das Verfahren nach Anspruch 1, wobei die Maschinenparameter aus der Gruppe, bestehend aus Maschinenmodell, Prozessormodell, Prozessordetails, Prozessorgeschwindigkeit, Speichermodell, Gesamtspeicher, Netzwerkmodell einer Ethernetschnittstelle, Netzwerk-MAC-Adresse der Ethernetschnittstelle, BlackBox-Modell, BlackBox-Serie, OS-Installationsdatum, Nonce-Wert und Nonce-Tageszeit ausgewählt wird

7. Eine erweiterte Vertrauensvorrichtung (12A, 12B, 12C; 500) zur gesicherten Kommunikation mit zumindest einem statischen Knoten (22) in einem Kontrollzentrum (20), umfassend:
einen Konnektor zum Verbinden mit einem Endgerät (14) wie zum Beispiel Controllern, Sensoren, Detektoren, Überwachungskameras und unterbrechungsfreien Stromversorgungssystemen;
ein Transceiver (530), konfiguriert, um mit mindestens einem statischen Knoten (22) zu kommunizieren;
ein Prozessor (506) in Wirkbeziehung an den Transceiver (530) gekoppelt; und
eine Speicherkomponente (508) in Wirkbeziehung an den Prozessor (506) gekoppelt und ausführbaren Code umfassend, welcher, wenn ausgeführt, dem Prozessor ermöglicht:
den zumindest einen statischen Knoten (22) über ein öffentliches Netzwerk (16) zu lokalisieren;
eine Gerätekennung von einer Vielzahl von Maschinenparametern der erweiterten Vertrauensvorrichtung (12A, 12B, 12C; 500) abzuleiten;
die Gerätekennung an den mindestens einen statischen Knoten (22) über den Transceiver (530) zu senden; und
ein sicheres privates Netzwerk (SPN) mit dem Kontrollzentrum (20) zu etablieren, so dass das sichere private Netzwerk (18) über ein oder mehrere Segmente des öffentlichen Netzwerks (16) tunnelt, um einen sicheren Kommunikationskanal zwischen dem Kontrollzentrum (20) und dem Endgerät (14) bereitzustellen.

8. Die Clientvorrichtung nach Anspruch 6, wobei das SPN als Antwort auf den zumindest einen statischen Knoten (22), der die Gerätekennung authentifiziert, etabliert wird.

9. Die erweiterte Vertrauensvorrichtung nach Anspruch 6, wobei die Gerätekennung zumindest teilweise auf einer Kohlenstoffabbaucharakteristik eines Computerchips der erweiterten Vertrauensvorrichtung basiert.

10. Die erweiterte Vertrauensvorrichtung nach Anspruch 6, wobei die Gerätekennung zumindest teilweise auf einer Silikonabbaucharakteristik eines Computerchips der erweiterten Vertrauensvorrichtung basiert.

11. Die erweiterte Vertrauensvorrichtung nach Anspruch 6, wobei die Gerätekennung durch Anwendung zumindest einer irreversiblen Transformation der Maschinenparameter generiert wird.

12. Die erweiterte Vertrauensvorrichtung nach Anspruch 6, wobei die Maschinenparameter aus der Gruppe, bestehend aus Maschinenmodell, Prozessormodell, Prozessordetails, Prozessorgeschwindigkeit, Speichermodell, Gesamtspeicher, Netzwerkmodell einer Ethernetschnittstelle, Netzwerk MAC Adresse der Ethernetschnittstelle, BlackBox Modell, BlackBox Serie, OS Installationsdatum, Nonce Wert und Nonce Tageszeit ausgewählt werden.

13. Ein computerlesbares Medium, welches ausführbare Instruktionen speichert, das, wenn es durch eine Vorrichtung ausgeführt wird, die Vorrichtung veranlasst, Prozessschritte durchzuführen, umfassend:
Kopplung in Wirkbeziehung an ein Endgerät;
eine Gerätekennung aus einer Vielzahl von Maschinenparametern ansässig auf der Vorrichtung ableiten;
die Gerätekennung an einen Authentifizierungsserver (22), der zwischen einen gesicherten Server (24) in einem Kontrollzentrum (20) und die Vorrichtung gekoppelt ist, wobei der gesicherte Server (24) hinter einer Firewall (34) lokalisiert ist, senden; und
ein sicheres privates Netzwerk (SPN) mit dem Kontrollzentrum (20) etablieren, wobei das sichere private Netzwerk über zumindest ein Segment des öffentlichen Netzwerks tunnelt, um einen sicheren Kommunikationskanal zwischen dem Kontrollzentrum und dem Endgerät bereitzustellen.

14. Das computerlesbare Medium nach Anspruch 12, wobei die Gerätekennung aus der Gruppe, bestehend aus einer MAC-Adresse, einer Internetprotokolladresse, einer Seriennummer, einer vorher festgelegten Identifikationsnummer, einem Benutzernamen, einem Gerätenamen und einem Benutzerpasswort ausgewählt wird.

15. Das computerlesbare Medium nach Anspruch 12, wobei die Vorrichtung zusätzlich die Durchführung von folgenden Prozessschritten umfasst:
Empfangen, nach dem Sendeschritt, eines Authentifizierungssignals für die Gerätekennung vom Authentifizierungsserver (22); und
Etablieren eines sicheren privaten Netzwerks (SPN) mit dem gesicherten Server (24) als Antwort auf den Erhalt des Authentifizierungssignals.

## Revendications

1. Procédé de prévention contre des cyber-attaques sur des infrastructures critiques, lesquelles infrastructures critiques comportent des dispositifs distants (14), tels que des contrôleurs, des capteurs, des détecteurs, des caméras de surveillance et des systèmes d'alimentation électrique ininterrompue éloignés d'un centre de commande (20), lequel procédé comprend les étapes comportant le fait de :
coupler fonctionnellement un système de sécurité étendue (12A, 12B, 12C) à un dispositif distant (14) ;
recevoir un identificateur de dispositif au niveau d'un serveur d'authentification (22) sur un réseau public (16) à partir dudit système de sécurité étendue (12A, 12B, 12C), le serveur d'authentification (22) étant couplé à des fins de communication entre un serveur sécurisé (24) présent dans ledit centre de commande (20) et le réseau public (16), l'identificateur de dispositif étant déduit à partir d'une pluralité de paramètres machine du système de sécurité étendue (12A, 12B, 12C) ;
accéder à une base de données des identificateurs de dispositif autorisés correspondant à des systèmes de sécurité étendue ; et
établir, en réponse à l'identificateur coïncidant avec l'un des identificateurs de dispositif autorisés, un réseau privé sécurisé, SPN, (18) entre le système de sécurité étendue (12A, 12B, 12C) et le centre de commande (20) de telle sorte que ledit réseau privé sécurisé (18) intervient à travers au moins un segment dudit réseau public (16) afin de fournir un canal sécurisé de communication entre ledit centre de commande (20) et ledit dispositif distant (14).

2. Procédé selon la revendication 1 comprenant, de plus, de recevoir un identificateur de client à partir du système de sécurité étendue, dans lequel l'identificateur de client est associé au dit dispositif distant (14) couplé fonctionnellement au système de sécurité étendue.

3. Procédé selon la revendication 2 dans lequel l'identificateur de client est sélectionné à partir du groupe constitué d'une adresse MAC du dispositif distant (14), d'une adresse de Protocole Internet du dispositif distant, d'un numéro de série du dispositif distant, d'un numéro d'identification prédéterminé du dispositif distant, d'un nom d'utilisateur, d'un nom de dispositif distant et d'un mot de passe d'utilisateur.

4. Procédé selon la revendication 2 comprenant, de plus, le fait d'authentifier l'identificateur de client.

5. Procédé selon la revendication 4 dans lequel l'étape d'authentification comprend, de plus, de déterminer un privilège d'accès du dispositif distant au serveur sécurisé.

6. Procédé selon la revendication 1 dans lequel les paramètres machine sont sélectionnés à partir du groupe constitué du modèle de la machine, du modèle de processeur, des détails du processeur, de la vitesse du processeur, du modèle de mémoire, du total de mémoire, du modèle de réseau d'une interface Ethernet, d'une adresse MAC de réseau sur l'interface Ethernet, du modèle de boite noire, de la série de boîte noire, de la date d'installation OS, de la valeur du paramètre "nonce" et de l'actualisation du paramètre "nonce" .

7. Système de sécurité étendue (12A, 12B, 12C ; 500) destiné à une communication sécurisée avec au moins un noeud statique (22) dans un centre de commande (20) ; comportant :
un connecteur permettant une interface avec un dispositif distant (14) tel que des contrôleurs, des capteurs, des détecteurs, des caméras de surveillance et des systèmes d'alimentation électrique ininterrompue ;
un émetteur-récepteur (530) configuré pour communiquer avec le, au moins un, noeud statique (22) ;
un processeur (506) couplé fonctionnellement à l'émetteur-récepteur (530) ; et
un composant mémoire (508) couplé fonctionnellement au processeur (506) et comportant un code exécutable, lequel, lorsqu'il est exécuté, permet au processeur de :
localiser le, au moins un, noeud statique (22) par l'intermédiaire d'un réseau public (16) ;
déduire un identificateur de dispositif à partir d'une pluralité de paramètres machine du système de sécurité étendue (12A, 12B, 12C ; 500) ;
transmettre l'identificateur de dispositif à au moins un noeud statique (22) par l'intermédiaire de l'émetteur-récepteur (530) ; et
établir un réseau privé sécurisé (SPN) avec le centre de commande (20) de telle sorte que ledit réseau privé sécurisé (18) intervienne à travers un ou plusieurs segment(s) dudit réseau public (16) afin de fournir un canal de communication sécurisé entre ledit centre de commande (20) et ledit dispositif distant (14).

8. Système client selon la revendication 7, dans lequel le réseau SPN est établi en réponse à au moins un noeud statique (22) authentifiant l'identificateur de dispositif.

9. Système de sécurité étendue selon la revendication 7, dans lequel l'identificateur de dispositif est basé, au moins en partie, sur une caractéristique de dégradation du carbone d'une puce d'ordinateur du système de sécurité étendue.

10. Système de sécurité étendue selon la revendication 7, dans lequel l'identificateur de dispositif est basé au moins en partie sur une caractéristique de dégradation du silicium d'une puce d'ordinateur du système de sécurité étendue.

11. Système de sécurité étendue selon la revendication 7, dans lequel l'identificateur de dispositif est généré en utilisant au moins une transformation irréversible des paramètres machine.

12. Système de sécurité étendue selon la revendication 7, dans lequel les paramètres machine sont sélectionnés à partir du groupe constitué du modèle de machine, du modèle de processeur, des détails du processeur, de la vitesse du processeur, du modèle de mémoire, du total de mémoire, du modèle de réseau d'une interface Ethernet, d'une adresse MAC de réseau de l'interface Ethernet, du modèle de boîte noire, de la série de boîte noire, de la date d'installation du système OS, de la valeur du paramètre "nonce", et de l'actualisation du paramètre "nonce".

13. Support exploitable par ordinateur stockant des instructions exécutables qui, lorsqu'elles sont exécutées par un système, entraînent le système à réaliser des étapes de processus comprenant le fait de :
se coupler fonctionnellement à un dispositif distant;
déduire un identificateur de dispositif à partir d'une pluralité de paramètres machine résidant dans le dispositif ;
transmettre l'identificateur de dispositif à un serveur d'authentification (22) couplé entre un serveur sécurisé (24) dans un centre de commande (20) et le dispositif, dans lequel le serveur sécurisé (24) est placé derrière un pare-feu (34) ; et
établir un réseau privé sécurisé (SPN) avec le centre de commande (20), ledit réseau privé sécurisé intervient à travers au moins un segment dudit réseau public afin de fournir un canal de communication sécurisé entre ledit centre de commande et ledit dispositif distant.

14. Support exploitable par ordinateur selon la revendication 13 dans lequel l'identificateur de dispositif est sélectionné à partir du groupe constitué d'une adresse MAC, d'une adresse de Protocole Internet, d'un numéro de série, d'un numéro d'identification prédéterminé, d'un nom d'utilisateur, d'un nom de dispositif et d'un mot de passe d'utilisateur.

15. Support exploitable par ordinateur selon la revendication 13 comprenant de plus le dispositif exécutant les étapes du procédé permettant de :
recevoir, après l'étape de transmission, un signal d'authentification correspondant à l'identificateur de dispositif à partir du serveur d'authentification (22) ; et
établir un réseau privé sécurisé (SPN) avec le serveur sécurisé (24) en réponse à la réception du signal d'authentification.
